# EUROPEAN PATENT SPECIFICATION

(11) **EP 4 412 133 B1**
(45) Date of publication and mention of the grant of the patent: **09.09.2026**
(21) Application number: 22874949.5
(22) Date of filing: 28.09.2022
(51) Int. Cl.: H04L 5/00, H04W 24/02, H04W 72/23

(54) **JOINT SCHEDULING METHOD AND DEVICE**
GEMEINSAMES PLANUNGSVERFAHREN UND VORRICHTUNG
PROCÉDÉ ET DISPOSITIF DE PLANIFICATION CONJOINTE

(30) Priority: 30.09.2021 CN 202111166357
(43) Date of publication of application: 07.08.2024
(73) Proprietor: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN); LI, Gen, Dongguan, Guangdong 523863 (CN)
(74) Representative: Michalski Hüttermann & Partner mbB
(86) International application number: PCT/CN2022/121948
(87) International publication number: WO 2023/051564

(56) References cited:
- WO-A1-2021/187966
- CN-A- 105 578 608
- CN-A- 112 425 109
- CN-A- 113 225 751
- CN-A- 113 286 372
- US-A1- 2014 029 490
- US-A1- 2016 345 206
- US-A1- 2021 144 746

## Description

### CROSS-REFERENCE TO RELATED APPLICATIONS

The present invention claims priority to Chinese Patent Application No. 202111166357.3, filed with the China National Intellectual Property Administration on September 30, 2021 and entitled "JOINT SCHEDULING METHOD AND DEVICE".

### TECHNICAL FIELD

This application pertains to the field of communication technologies, and specifically relates to a joint scheduling method and a device. The device may include a joint scheduling apparatus, a terminal, a network side device, and the like.

### BACKGROUND

In the related art, each piece of control information can be used to schedule transmission on only one cell (or carrier) at a time, resulting in large control information overheads of some cells and affecting a system capacity. To resolve the problem of large control information overheads, in the related art, one piece of control information of a scheduling cell is used to simultaneously schedule transmission on a plurality of scheduled cells, thereby reducing control information overheads. However, a plurality of scheduled objects that can be scheduled by one piece of control information of a scheduling cell need to be determined, to prevent communication performance from being affected by a transmission problem caused by inconsistent understanding of a terminal or a network side device.
US2021/144746A1 discloses a PDCCH monitoring method, a terminal and a network device. The method includes: monitoring PDCCH according to PDCCH blind detection capability information of N scheduling cells which are in M cells configured for UE by a network device and further including X scheduled cells; PDCCH blind detection capability information is related to a cell parameter of M cells and indicates maximum processing capability of UE in performing PDCCH blind detection in each or N scheduling cells per unit time; M and N are positive integers greater than or equal to 1, X is a positive integer greater than or equal to 0, M=N+X.

### SUMMARY

The invention is defined by the independent claims. Embodiments are defined by the dependent claims.

### BRIEF DESCRIPTION OF DRAWINGS

FIG. 1 is a schematic diagram of a wireless communication system according to an embodiment of this application;
FIG. 2 is a schematic flowchart of a joint scheduling method according to an embodiment of this application;
FIG. 3 is a schematic diagram of a specific application of a joint scheduling method according to an embodiment of this application;
FIG. 4 is a schematic diagram of a specific application of a joint scheduling method according to an embodiment of this application;
FIG. 5 is a schematic diagram of a specific application of a joint scheduling method according to an embodiment of this application;
FIG. 6 is a schematic diagram of a specific application of a joint scheduling method according to an embodiment of this application;
FIG. 7 is a schematic flowchart of a joint scheduling method according to an embodiment of this application;
FIG. 8 is a schematic structural diagram of a joint scheduling apparatus according to an embodiment of this application;
FIG. 9 is a schematic structural diagram of a joint scheduling apparatus according to an embodiment of this application;
FIG. 10 is a schematic structural diagram of a communication device according to an embodiment of this application;
FIG. 11 is a schematic structural diagram of a terminal according to an embodiment of this application; and
FIG. 12 is a schematic structural diagram of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill based on the embodiments of this application shall fall within the protection scope of this application.

In the specification and claims of this application, the terms "first", "second", and the like are intended to distinguish between similar objects but do not describe a specific order or sequence. It should be understood that the terms used in such a way are interchangeable in proper circumstances so that the embodiments of this application can be implemented in orders other than the order illustrated or described herein. Objects classified by "first" and "second" are usually of a same type, and the number of objects is not limited. For example, there may be one or more first objects. In addition, in the specification and claims, "and/or" represents at least one of connected objects, and a character "/" generally represents an "or" relationship between associated objects.

It should be noted that technologies described in the embodiments of this application are not limited to a Long Time Evolution (Long Time Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application may be used interchangeably. The technologies described can be applied to both the systems and the radio technologies mentioned above as well as to other systems and radio technologies. The following describes a New Radio (New Radio, NR) system for example purposes, and NR terms are used in most of the following descriptions. These technologies can also be applied to applications other than an NR system application, such as a 6th generation (6th Generation, 6G) communication system.

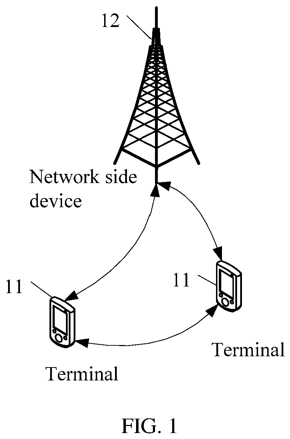

FIG. 1 is a schematic diagram of a wireless communication system to which the embodiments of this application can be applied. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palm computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart household (a household device with a wireless communication function, such as a refrigerator, a television, a washing machine, or furniture), and the wearable device includes a smart watch, a smart band, a smart headset, smart glasses, smart jewelry (a smart bangle, a smart bracelet, a smart ring, a smart necklace, a smart anklet, and a smart chain), a smart wrist strap, a smart dress, a game console, and the like. It should be noted that a specific type of the terminal 11 is not limited in the embodiments of this application. The network side device 12 may be a base station or a core network The base station may be referred to as a NodeB, an evolved NodeB, an access point, a base transceiver station (Base Transceiver Station, BTS), a radio base station, a radio transceiver station, a basic service set (Basic Service Set, BSS), an extended service set (Extended Service Set, ESS), a NodeB, an evolved NodeB (eNB), a next-generation node B (gNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

In the embodiments of this application, an association relationship between a scheduling object and a scheduled object group may be semi-statically determined. In this method, the terminal may determine a first scheduled object group that may be scheduled by a first scheduling object. In the embodiments of this application, alternatively, an association relationship between a scheduling object and a scheduled object group may be dynamically determined. For example, joint control information of a scheduling cell carries information about a scheduled cell group.

According to the joint scheduling method provided in the embodiments of this application, a terminal may determine a first scheduling object and a first scheduled object group whose scheduling is supported by the first scheduling object, and a network side device may configure, for the terminal, the first scheduling object and the first scheduled object group whose scheduling is supported by the first scheduling object, so that a receive end and a transmit end (for example, a terminal and a network side device or a terminal and another terminal) have the same understanding of a scheduling object and a scheduled object.

It should be noted that the "association" mentioned in the embodiments of this application may be understood as a generalized concept, and may be interpreted as including, indicating, corresponding to, or the like. The "configuration" mentioned in the embodiments of this application may be understood as a generalized concept, and may include configuring, indicating, or the like. In the embodiments of this application, A includes, indicates, corresponds to, or is associated with B, and in an implementation method, configuration of A or A includes an identifier of B. For example, that an object configuration is associated with a first scheduling object may be specifically that the object configuration includes an identifier of the first scheduling object. In the embodiments of this application, C indicates D, and in an implementation method, C indicates an identifier of D. For example, that an object configuration indicates a first scheduling object may be specifically that the object configuration indicates an identifier of the first scheduling object.

With reference to the accompanying drawings, the following describes in detail a joint scheduling method and a device provided in the embodiments of this application by using some embodiments and application scenes thereof.

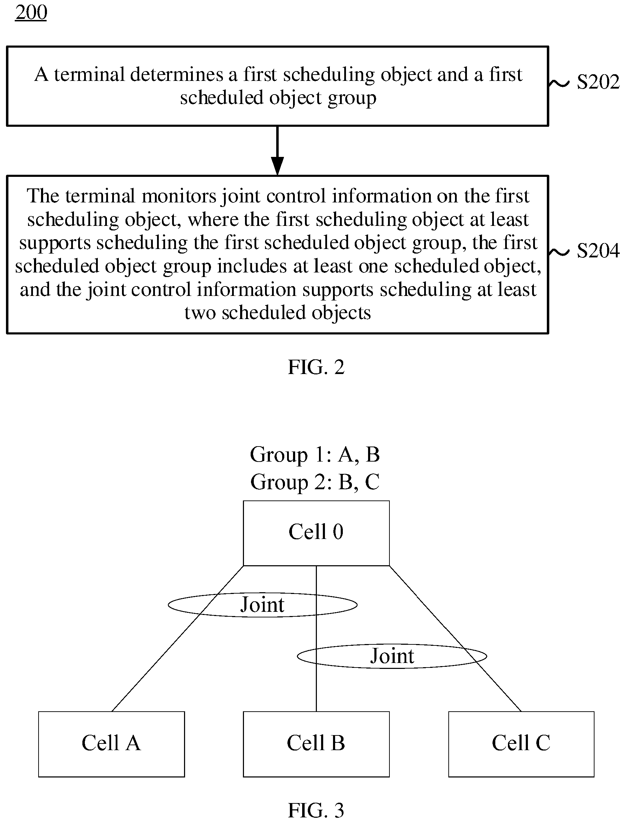

As shown in FIG. 2, an embodiment of this application provides a joint scheduling method 200. The method may be performed by a terminal. In other words, the method may be performed by software or hardware installed in the terminal. The method includes the following steps.

S202: A terminal determines a first scheduling object and a first scheduled object group.

S204: The terminal monitors joint control information on the first scheduling object, where the first scheduling object at least supports scheduling the first scheduled object group, the first scheduled object group includes at least one scheduled object, and the joint control information supports scheduling at least two scheduled objects.

The objects mentioned in this embodiment of this application, such as a scheduling object and a scheduled object, may be at least one of a cell, a carrier, data, a signal, power control information, a resource format, a bandwidth part (Bandwidth Part, BWP), a resource pool, another control signal, and the like. In the following embodiment, a scheduling cell is used as an example to describe a scheduling object, and a scheduled cell is used as an example to describe a scheduled object.

The joint control information may be control information for scheduling or indicating a plurality of objects, or may be control information including scheduling information fields of a plurality of objects. The j oint control information may be joint downlink control information (Downlink Control Information, DCI), joint sidelink control information (Sidelink Control Information, SCI), or the like. A control resource set in which the joint control information is located may also be referred to as a joint control resource set, such as a search space (Search Space, SS).

The joint control information may be transmitted on a control resource set. The control resource set may include at least one of the following: a search space (Search Space, SS), a control resource set (Control Resource SET, CORESET), a monitoring occasion (monitoring occasion), a slot (slots), and a time span (span).

In this embodiment, the joint control information supports scheduling at least two scheduled objects, but in a special case, the joint control information is used to schedule only one scheduled object.

In this embodiment, a network side device may configure the first scheduling object and the first scheduled object group for the terminal. In this way, the terminal may determine the first scheduling object and the first scheduled object group, and monitor, blindly detect, send, or receive the joint control information on the first scheduling object.

The "transmission" mentioned in the embodiments of this application may be understood as a generalized concept, and may include monitoring, blind detection, sending, or receiving. This embodiment of this application may be applied to a transmit end terminal, or may be applied to a receive end terminal.

Application scenes of the embodiments of this application may be classified into two types: Scene 1: A network side device interacts with a terminal, where the network side device generally serves as a transmit end, and the terminal generally serves as a receive end. Scene 2: A network side device, a transmit end terminal, and a receive end terminal interact with each other. In the scene 2, the network side device generally configures a first scheduling object and a first scheduled object group for the transmit end terminal and/or the receive end terminal, the transmit end terminal sends joint control information by using the first scheduling object, and the receive end terminal monitors, blindly detects, or receives the joint control information; or the network side device sends joint control information in a target control resource set, and the transmit end terminal monitors, blindly detects, or receives the joint control information in the target control resource set, and sends a signal or a channel to the receive end terminal according to an indication or scheduling of the joint control information, for example, sends a sidelink signal or channel. In an example, this embodiment may be applied to a user to network universal interface (User to network universal interface, Uu) scene. In this embodiment, the terminal obtains a first scheduling object and a first scheduled object group that are configured or indicated by a network side device, and monitors, blindly detects, or receives joint control information from the network side device on the first scheduling object.

In another example, this embodiment may be applied to a terminal to terminal (UE to UE) scene. In this embodiment, a terminal serving as a receive end may obtain a first scheduling object and a first scheduled object group that are configured by a network side device, or obtain a first scheduling object and a first scheduled object group that are configured by a transmit end terminal, and monitor, blindly detect, or receive joint control information from the transmit end terminal on the first scheduling object.

According to the joint scheduling method provided in this embodiment of this application, the terminal determines the first scheduling object and the first scheduled object group, and monitors the joint control information on the first scheduling object, where the first scheduling object at least supports scheduling the first scheduled object group, the first scheduled object group includes at least one scheduled object, and the joint control information supports scheduling at least two scheduled objects. In this embodiment of this application, consistency between the terminal and the network side device in understanding a scheduling object and a scheduled object is maintained, thereby avoiding a transmission problem caused by inconsistent understanding, and improving communication validity.

Optionally, based on Embodiment 200, that a terminal determines a first scheduling object includes at least one of the following (1) to (5):
(1) The terminal obtains an object configuration, where the object configuration is associated with the first scheduling object, and the scheduled object in the first scheduled object group includes an object corresponding to the object configuration.

In this example, the terminal may determine, based on the obtained object configuration, the first scheduling object associated with the object configuration.

The object configuration may also be referred to as a configuration of an object, and therefore the object may also be referred to as the object corresponding to the object configuration. The object may be a scheduled object in the first scheduled object group.

That the object configuration is associated with the first scheduling object includes, for example, that the object configuration includes an identifier of the first scheduling object, or that carrier indication information of the object corresponding to the object configuration is associated with the first scheduling object. The "association" mentioned in the embodiments of this application may be understood as a generalized concept, and may be interpreted as including, indicating, corresponding to, or the like.

(2) The terminal obtains at least one scheduled object configuration, where the scheduled object configuration is associated with the first scheduling object, and the scheduled object in the first scheduled object group includes a scheduled object corresponding to the scheduled object configuration.

In this example, the terminal may determine, based on the obtained scheduled object configuration, the first scheduling object associated with the scheduled object configuration.

The scheduled object configuration may also be referred to as a configuration of a scheduled object. Therefore, the scheduled object may also be referred to as a scheduled object corresponding to the scheduled object configuration. The scheduled object may be a scheduled object in the first scheduled object group.

That the scheduled object configuration is associated with the first scheduling object includes, for example, that the scheduled object configuration includes the identifier of the first scheduling object, or that carrier indication information of the scheduled object corresponding to the scheduled object configuration is associated with the first scheduling object.

The foregoing (1) and (2) may be alternatively described as follows: The terminal obtains an object configuration or a scheduled object configuration corresponding to at least one scheduled object in the first scheduled object group, where a scheduling object associated with the configuration is the first scheduling object.

(3) The terminal obtains a first scheduled object group configuration, where the first scheduled object group configuration is associated with the first scheduling object.

In this example, the terminal may determine, based on the obtained first scheduled object group configuration, the first scheduling object associated with the first scheduled object group configuration.

The first scheduled object group configuration may also be referred to as a configuration of the first scheduled object group. That the first scheduled object group configuration is associated with the first scheduling object includes, for example, that the first scheduled object group configuration includes an identifier of the first scheduling object.

(4) The terminal obtains a scheduling object configuration, where the scheduling object configuration is associated with the first scheduling object.

In this example, the terminal may determine, based on the obtained scheduling object configuration, the first scheduling object associated with the scheduling object configuration.

In this embodiment, when the scheduling object configuration is associated with the first scheduling object, it indicates that the first scheduling object may perform joint scheduling. For example, a configuration of a cell 1 (cell 1) carries an identifier of the cell 1, which indicates that the cell 1 may perform joint scheduling. The joint scheduling may mean that a plurality of scheduled objects are scheduled by using one piece of joint control information.

(5) The terminal obtains a scheduling object configuration, where the scheduling object configuration indicates that the first scheduling object supports or enables joint scheduling.

In this example, the terminal may determine the first scheduling object based on the obtained scheduling object configuration.

The foregoing (4) to (5) may be alternatively described as follows: The terminal obtains a scheduling object configuration indicating that joint scheduling is supported or enabled, where a scheduling object corresponding to the configuration is the first scheduling object.

Optionally, based on the foregoing embodiments, that a terminal determines a first scheduled object group includes at least one of the following (1) to (12):
(1) The terminal obtains configuration information, where the configuration information configures or indicates the first scheduled object group.
   In this embodiment, the network side device may directly configure or indicate a scheduled object group for the terminal. For example, the network side device directly configures the first scheduled object group associated with the first scheduling object.
(2) The terminal obtains a first scheduling object configuration, where the first scheduling object configuration is associated with the first scheduled object group.
   The first scheduling object configuration may be a configuration of the first scheduling object, and the configuration of the first scheduling object is associated with the first scheduled object group.
   In this embodiment, for example, a scheduling cell configuration includes an identifier of a scheduled cell group. Assuming that a scheduling cell configuration includes a scheduled cell group 1, a cell group that may be jointly scheduled by the scheduling cell is the scheduled cell group 1. Further, if the scheduled cell group 1 includes a cell A and a cell B, cells that may be jointly scheduled by the scheduled cell are the cell A and the cell B.
(3) The terminal obtains a first scheduling object configuration, where the first scheduling object configuration is associated with a scheduled object, and the associated scheduled object forms the first scheduled object group.
   The first scheduling object configuration may be a configuration of the first scheduling object, the configuration of the first scheduling object is associated with a scheduled object, and the scheduled object is a scheduled object in the first scheduled object group.
   In this embodiment, for example, if a scheduling cell configuration includes identifiers of two scheduled cells: identifiers of a cell A and a cell B, cells that may be jointly scheduled by the scheduling cell are the cell A and the cell B, and the cell A and the cell B form the first scheduled object group.
(4) The terminal obtains an object configuration, where the object configuration is associated with the first scheduling object, and an object corresponding to the object configuration (and associated with the first scheduling object) forms the first scheduled object group.

The object configuration may be a configuration of an object, and the object may be referred to as the object corresponding to the object configuration. That the object configuration is associated with the first scheduling object includes, for example, that the object configuration includes an identifier of the first scheduling object, or that carrier indication information of the object corresponding to the object configuration is associated with the first scheduling object.

In this embodiment, for example, if two cells include a same scheduling cell identifier, the two cells may be jointly scheduled by a scheduling cell corresponding to the identifier.

In this embodiment, for another example, if both carrier indication information of a cell A and carrier indication information of a cell B indicate a cell 1, the cell 1 may jointly schedule the cell A and the cell B.

(5) The terminal obtains a scheduled object configuration, where the scheduled object configuration is associated with the first scheduling object, and a scheduled object corresponding to the scheduled object configuration (and associated with the first scheduling object) forms the first scheduled object group.

The scheduled object configuration may be a configuration of a scheduled object, and the scheduled object may be referred to as the scheduled object corresponding to the scheduled object configuration. That the scheduled object configuration is associated with the first scheduling object includes, for example, that the scheduled object configuration includes an identifier of the first scheduling object, or that carrier indication information of the scheduled object corresponding to the scheduled object configuration is associated with the first scheduling object.

In this embodiment, for example, if two scheduled cells include a same scheduling cell identifier, the two scheduled cells may be jointly scheduled by a scheduling cell corresponding to the identifier.

In this embodiment, for another example, if both carrier indication information of a scheduled cell A and carrier indication information of a scheduled cell B indicate a cell 1, the cell 1 may jointly schedule the scheduled cell A and the scheduled cell B.

(6) The terminal obtains a scheduled object group configuration, where the scheduled object group configuration is associated with the first scheduling object, and a scheduled object corresponding to the scheduled object group configuration (and associated with the first scheduling object) forms the first scheduled object group.

The scheduled object group configuration may be a configuration of a scheduled object group, and the scheduled object group may be referred to as the scheduled object group corresponding to the scheduled object group configuration. That the scheduled object group configuration is associated the first scheduling object includes, for example, that the scheduled object group configuration includes an identifier of the first scheduling object, or that carrier indication information of the scheduled object corresponding to the scheduled object group configuration is associated with the first scheduling object.

In this embodiment, for example, if a scheduled object group includes a cell A and a cell B, and the scheduled object group configuration includes an identifier of a scheduling cell 1, the cell A and the cell B may be jointly scheduled by the scheduling cell 1.

In this embodiment, for another example, if a scheduled object group includes a cell A and a cell B, and both carrier indication information of the scheduled cell A and carrier indication information of the scheduled cell B in the scheduled object group configuration indicate a cell 1, the cell 1 may jointly schedule the scheduled cell A and the scheduled cell B.

Based on any one of the foregoing (4) to (6), a method for determining a scheduled object group corresponding to a given scheduling cell is: determining an object corresponding to an object configuration and associated with the scheduling object; or determining a scheduled object corresponding to a scheduled object configuration and associated with the scheduling object; or determining a scheduled object group corresponding to a scheduled object group configuration and associated with the scheduling object.

Based on any one of the foregoing (4) to (6), a method for determining a first scheduled object group corresponding to a given first scheduling cell is: in an object configuration or a scheduled object group configuration, including, indicating, corresponding to, or associating with an object of the first scheduling object, where the object forms the first scheduled object group; or in an object configuration or a scheduled object group configuration, including, indicating, corresponding to, or associating with a scheduled object of the first scheduling object, where the scheduled object forms the first scheduled object group.

(7) The terminal obtains an object configuration and a first scheduling object configuration, where an object corresponding to the object configuration is associated with the first scheduling object, the first scheduling object configuration indicates the object, and the first scheduled object group includes the object.

That the object mentioned in this embodiment is associated with the first scheduling object includes, for example, that carrier indication information corresponding to the object indicates the first scheduling object. For example, the carrier indication information corresponding to the object is set to an identifier of the first scheduling object.

In this embodiment, for example, if both CIFs of scheduled cells A and B indicate a cell 1, and a configuration of the cell 1 includes the cell A and the cell B, the cell 1 may jointly schedule the cells A and B. The cell A and the cell B form a scheduled object group.

(8) The terminal obtains a scheduled object group configuration and a first scheduling object configuration, where a scheduled object or a scheduled object group corresponding to the scheduled object group configuration is associated with the first scheduling object, the first scheduling object configuration indicates the scheduled object or the scheduled object group, and the first scheduled object group includes the scheduled object or the scheduled object group.

That the scheduled object or the scheduled object group mentioned in this embodiment is associated with the first scheduling object includes, for example, that carrier indication information corresponding to the scheduled object or the scheduled object group indicates the first scheduling object. For example, the carrier indication information corresponding to the scheduled object is set to an identifier of the first scheduling object, and carrier indication information corresponding to a scheduled object in the scheduled object group is set to an identifier of the first scheduling object.

In this embodiment, for example, if both CIFs of scheduled cells A and B indicate a cell 1, and a configuration of the cell 1 includes a scheduled cell group corresponding to the cell A and the cell B, the cell 1 may jointly schedule the cells A and B.

Based on the foregoing (7) or (8), a method for determining a scheduled object group corresponding to a given scheduling cell is: determining an object corresponding to an object configuration and associated with the scheduling object, where the scheduling object configuration indicates the object; or determining a scheduled object group corresponding to a scheduled object group configuration and associated with the scheduling object, where the scheduling object configuration indicates the scheduled object group or indicates a scheduled object in the scheduled object group.

Based on the foregoing (7) or (8), a method for determining a first scheduled object group corresponding to a given first scheduling cell may be: in an object configuration or a scheduled object group configuration, including, indicating, corresponding to, or associating with an object or a scheduled object of the first scheduling object, where at least one of the following is met: (a) In a first scheduling object configuration, the foregoing object or the scheduled object is included or indicated, where the foregoing object or the scheduled object forms the first scheduled object group. (b) In a first scheduling object configuration, a first scheduled object group corresponding to the foregoing object or the scheduled object is included or indicated.

(9) The terminal obtains an object configuration, where the object configuration is associated with the first scheduling object, and an object corresponding to the object configuration and corresponding to same carrier indication information forms the first scheduled object group.

In this embodiment, carrier indication information of a plurality of objects may indicate a same scheduling object. Optionally, carrier indication information of a plurality of objects indicates at least one of a same scheduling object.

(10) The terminal obtains a scheduled object group configuration, where the scheduled object group configuration is associated with the first scheduling object, and a scheduled object corresponding to the scheduled object group configuration and corresponding to same carrier indication information forms the first scheduled object group.

In this embodiment, carrier indication information of a plurality of scheduled objects may indicate a same scheduling object. Optionally, carrier indication information of a plurality of scheduled objects indicates at least one of a same scheduling object. Based on the foregoing (9) or (10), a method for determining a scheduled object group corresponding to a given scheduling cell is: determining an object corresponding to the object configuration and corresponding to same carrier indication information, where the object forms a scheduled object group; or determining a scheduled object corresponding to the scheduled object group configuration and corresponding to same carrier indication information.

Based on the foregoing (9) or (10), a method for determining a first scheduled object group corresponding to a given first scheduling object is: in an object configuration or a scheduled object group configuration, including, indicating, corresponding to, or associating with the first scheduling object, where an object or a scheduled object corresponding to a same CIF forms the first scheduled object group.

Optionally, the CIF includes, indicates, corresponds to, or is associated with at least one of a same scheduling object.

(11) The terminal obtains an object configuration, where the object configuration corresponds to one scheduled object of the first scheduling object, and the first scheduled object group is the one scheduled object.

In this embodiment, for example, if a configuration of a cell 1 indicates that a scheduling cell is a cell 2, the scheduling cell 2 may schedule the cell 1 on a target control resource set, and/or may schedule the cell 1 by using joint control information.

(12) The terminal obtains a scheduled object group configuration, where the scheduled object group configuration corresponds to one scheduled object of the first scheduling object, and the first scheduled object group is the one scheduled object.

In this embodiment, for example, if a scheduled object group includes a cell 1, and a configuration of the cell 1 indicates that a scheduling cell is a cell 2, the scheduling cell 2 may schedule the cell 1 on a target control resource set, and/or may schedule the cell 1 by using joint control information.

Optionally, that the object configuration is associated with the first scheduling object in the foregoing examples (1) to (12) includes: that the object configuration indicates the first scheduling object, for example, the object configuration indicates an identifier of the first scheduling object; or carrier indication information of the object corresponding to the object configuration indicates the first scheduling object.

Optionally, that the scheduled object group configuration is associated with the first scheduling object in the foregoing examples (1) to (12) includes: that the scheduled object group configuration indicates the first scheduling object, for example, the scheduled object group configuration indicates an identifier of the first scheduling object; or carrier indication information of the scheduled object corresponding to the scheduled object group configuration indicates the first scheduling object.

The "indication" mentioned in the foregoing two examples may be an explicit indication, for example, an identifier is directly included; or an implicit indication, for example, different identifiers are indicated by using different coding methods, scrambling methods, or reference signals.

Optionally, the carrier indication information mentioned in the foregoing embodiments meets at least one of the following: (1) The carrier indication information is configured by a network side device. (2) The carrier indication information is determined according to carrier indication information of one or more scheduled objects, where the carrier indication information includes at least one of the following: carrier indication information of an object, carrier indication information of a scheduled object, and carrier indication information of the first scheduled object group.

The carrier indication information mentioned in this embodiment may be a carrier indicator (Carrier Indicator Field, CIF) or a carrier indicator of a scheduling cell (cif-InSchedulingCell).

In this embodiment, for example, a CIF of a scheduled object group is determined according to a CIF of at least one scheduled object included in the scheduled object group. Assuming that the scheduled object group includes an object 1 and an object 2, and a CIF of the object 1 and a CIF of the object 2 are respectively 3 and 4, the CIF of the scheduled object group is determined according to 3 and 4.

Based on Embodiment 200, the method further includes the following step: obtaining, by the terminal, a first scheduled object group configuration (hereinafter referred to as method 1), that is, obtaining a configuration of the first scheduled object group, where the first scheduled object group configuration meets at least one of the following (1) to (5):
(1) The first scheduled object group configuration is associated with at least two objects, for example, identifiers of the at least two objects. The at least two objects herein are at least two scheduled objects.
   In this embodiment, the terminal may determine a scheduled object group according to a scheduled object group configuration. For example, an RRC configuration includes a scheduled object group (scheduledcellscombination), where identifiers of cells that may be jointly scheduled are included. Assuming that identifiers of a cell 1 and a cell 2 are included, the cell 1 and the cell 2 may be jointly scheduled.
(2) The first scheduled object group configuration is associated with at least one scheduling object, for example, an identifier of the at least one scheduling object.
   In this embodiment, the terminal determines a scheduling object according to a scheduled object group configuration.
(3) The first scheduled object group configuration is associated with one or more scheduled object groups, for example, identifiers of the one or more scheduled object groups, where each identifier is associated with at least two objects.
   In this embodiment, the terminal determines a scheduled object group according to a scheduled object group configuration.
(4) The first scheduled object group configuration is included in a first scheduling object configuration.
   In this embodiment, the terminal determines, according to an object configuration in which a scheduled object group configuration is located, that an object corresponding to the object configuration is a scheduling cell of a scheduled object group associated with the scheduled object group configuration.
   In this embodiment, for example, if a configuration of a cell A includes a scheduled object group configuration, and the scheduled object group configuration includes cells B and C, the cell A may jointly schedule the cells B and C.
(5) The first scheduled object group configuration includes an identifier of the first scheduling object.

In this embodiment, the terminal determines a scheduling object of a scheduled object group according to the identifier.

The foregoing identifier may include a plurality of sub-identifiers. For example, if an object is a BWP of a cell, an identifier of the cell and an identifier of the BWP may be included in this case.

In this method, new configuration signaling is mainly introduced to provide a correspondence between a scheduled object group and a scheduling object.

Optionally, based on Embodiment 200, the method further includes the following step: obtaining, by the terminal, a first scheduling object configuration (hereinafter referred to as method 2), where the first scheduling object configuration meets at least one of the following:
(1) The first scheduling object configuration indicates that a scheduling object corresponding to the first scheduling object configuration supports or enables joint scheduling.
(2) The first scheduling object configuration includes a first scheduled object group configuration. The first scheduled object group configuration is, for example, an identifier of the first scheduled object group, and the identifier may be considered as a configuration.
(3) The first scheduling object configuration includes a configuration of at least one scheduled object in the first scheduled object group.

In this embodiment, the terminal determines that objects corresponding to an object configuration that includes a same scheduling object identifier belongs to a same scheduled object group. For example, the object configuration is a cross-carrier scheduling configuration (CrossCarrierSchedulingConfig) of a scheduled cell. Because CrossCarrierSchedulingConfig of the scheduled cell provides a scheduling cell ID (for example, schedulingCellId), if scheduling cell IDs (for example, schedulingCellId) of two cells are the same, it indicates that the two cells may be jointly scheduled by DCI of a cell corresponding to the scheduling cell ID.

The foregoing identifier may include a plurality of sub-identifiers. For example, if an object is a BWP of a cell, an identifier of the cell and an identifier of the BWP may be included in this case.

In this method, CrossCarrierSchedulingConfig is mainly used to provide a correspondence between a scheduled object group and a scheduling object.

Optionally, based on Embodiment 200, the method further includes the following step: obtaining, by the terminal, an object configuration (referred to as method 3, and method 3 is method 1+method 2), where the object configuration meets: the object configuration includes an identifier of a first scheduled object, and an object corresponding to the object configuration is associated with the first scheduled object.

In this embodiment, for example, a scheduling cell configuration includes information about a cell combination that may be jointly scheduled, and a scheduling cell configuration includes a scheduling cell ID.

Optionally, the determining, by a terminal, a first scheduled object group includes: receiving, by the terminal, a first scheduling object configuration and a first scheduled object configuration, where the first scheduling object configuration includes information about a scheduled object whose scheduling is supported by the first scheduling object, and the first scheduled object configuration includes information about a scheduling object that can schedule the first scheduled object group.

Optionally, the method provided in the foregoing embodiments further includes the following step: obtaining, by the terminal, blind detection information, where the blind detection information indicates at least one of the following:
(1) A quantity of blind detection times for the one or more first scheduled object groups. For example, a scheduling cell configuration includes a total quantity of blind detection times for parameter joint scheduling (total number of candidates for joint scheduling), used by the joint control information for one or more scheduled object groups.
(2) An aggregation level for the one or more first scheduled object groups.
(3) A quantity of blind detection times for at least one scheduled object in each of the one or more first scheduled object groups.
(4) An aggregation level for at least one scheduled object in each of the one or more first scheduled object groups.

In the embodiments of this application, the terminal may determine the first scheduling object and the first scheduled object group., and then determine a target control resource set associated with the first scheduled object group. In other words, after S202 and before S204, the method may further include the following step: determining, by the terminal, the target control resource set associated with the first scheduled object group, where the first scheduling object sends the joint control information by using the target control resource set. For a specific determining method, refer to the following Embodiment 5 to Embodiment 8.

Alternatively, the terminal may determine a target control resource set on the first scheduling object, and then determine the one or more first scheduled object groups associated with the first scheduling object. In other words, before S202, the method may further include the following step: determining, by the terminal, the target control resource set on the first scheduling object. For a specific determining method, refer to the following Embodiment 5 to Embodiment 8.

To describe in detail the joint scheduling method provided in the embodiments of this application, several specific embodiments will be illustrated below.

### Embodiment 1

In this embodiment, as shown in FIG. 3, if a configuration of a cell 0 includes two scheduled object groups, where a group 1 is cells A and B and a group 2 is cells B and C, the terminal determines that joint control information of the cell 0 may be used to simultaneously schedule the cells A and B or simultaneously schedule the cells B and C.

### Embodiment 2

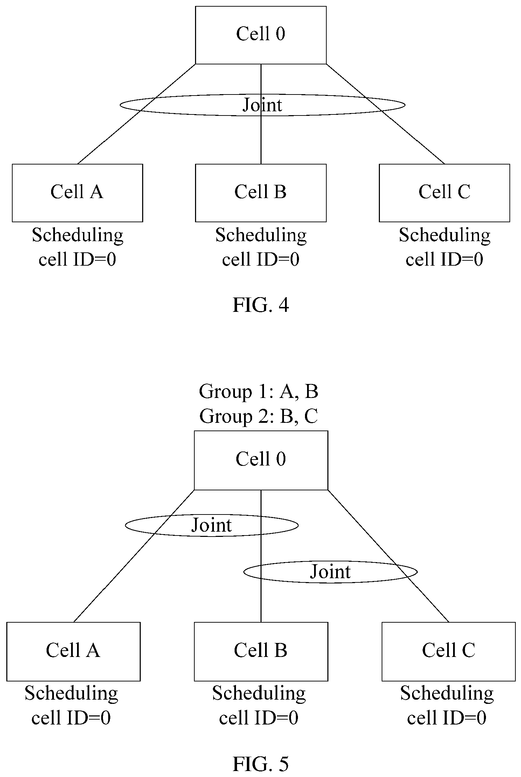

In this embodiment, as shown in FIG. 4, if a configuration of a cell A, a cell B, and a cell C includes an ID 0 of a scheduling cell, it is determined that the three cells may be scheduled by using joint control information of the cell 0.

### Embodiment 3

In this embodiment, as shown in FIG. 5, if a configuration of a cell A, a cell B, and a cell C includes an ID 0 of a scheduling cell, it is determined that the three cells may be scheduled by using joint control information of the cell 0.

If a configuration of the cell 0 includes two scheduled object groups, where a group 1 is cells A and B and a group 2 is cells B and C, the terminal determines that the joint control information of the cell 0 may be used to simultaneously schedule the cells A and B or simultaneously schedule the cells B and C.

### Embodiment 4

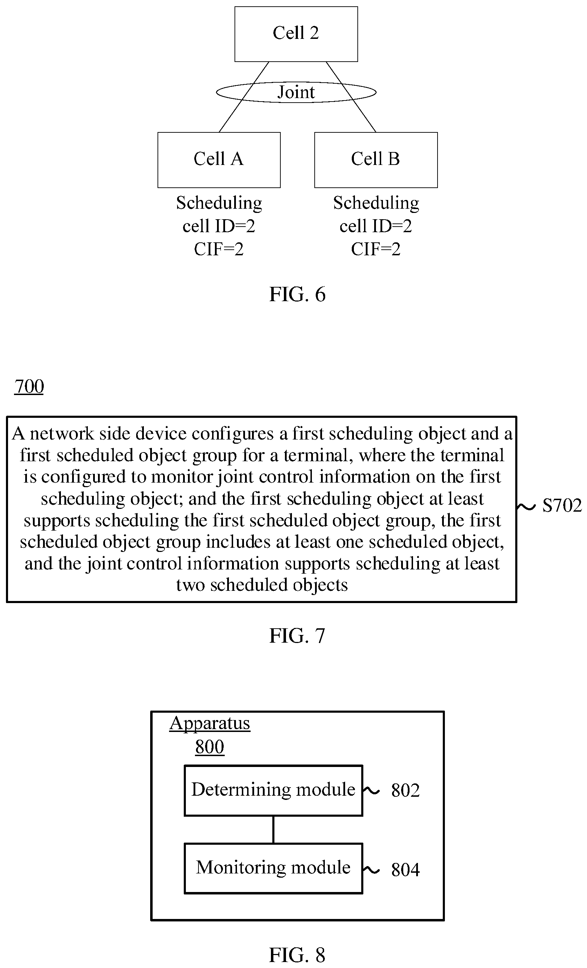

In this embodiment, as shown in FIG. 6, if a configuration of scheduled objects A and B indicates that a scheduling object is a cell 2, and CIFs of the scheduled objects A and B are the same, the terminal determines that joint control information of a cell 0 may be used to simultaneously schedule the cells A and B.

Further, when the configuration of the scheduled objects A and B indicates that the scheduling object is the cell 2, and CIFs of the scheduled objects A and B indicate the cell 2, the terminal determines that joint control information of the cell 2 may be used to simultaneously schedule the cells A and B.

### Embodiment 5

In this embodiment, the terminal may determine a target SS by using an SSID and a full+lite configuration.

In this embodiment, if a scheduling cell 0 may jointly schedule a cell 1 and a cell 2, and a configuration of the cell 0 includes a full configuration of a search space 3 (SS3), and a configuration of the scheduled cells 1 and 2 includes a lite configuration of the SS3, the cell 0 may jointly schedule the cell 1 and the cell 2 by using the SS3.

### Embodiment 6

In this embodiment, the terminal may determine a target SS by using information about a scheduled object cell included in an SS configuration.

In this embodiment, if a scheduling cell 0 may jointly schedule a cell 1 and a cell 2, a configuration of the cell 0 includes a full configuration of a search space 3 (SS3), and the SS3 is associated with the cell 1 and the cell 2, the cell 0 may jointly schedule the cell 1 and the cell 2 by using the SS3. Specifically, for example, a configuration of the SS3 carries identifiers of the cell 1 and the cell 2, so that the terminal determines that the cell 0 may jointly schedule the cell 1 and the cell 2 by using the SS3.

### Embodiment 7

In this embodiment, the terminal may determine a target SS by using a CIF corresponding to an SS and a CIF of a scheduled cell or a scheduled cell group.

In this embodiment, for example, a scheduling cell 4 may jointly schedule a cell 1 and a cell 2, and a configuration of the cell 4 includes a configuration of a search space 3 (SS3).

Further, a CIF corresponding to the SS3 is the same as a CIF corresponding to the cell 1/cell 2. Specifically, for example, if the CIF associated with the SS3 is 4, and the CIFs of the cell 1 and the cell 2 are 4, the cell 4 may jointly schedule the cell 1 and the cell 2 by using the SS3.

In this embodiment, for another example, a scheduling cell 4 may jointly schedule a cell 1 and a cell 2, and a configuration of the cell 4 includes a configuration of a search space 3 (SS3). A scheduling cell 7 may jointly schedule a cell 7 and a cell 8, and a configuration of the cell 7 includes the configuration of the search space 3 (SS3).

Further, a CIF corresponding to the SS3 includes CIFs corresponding to the cell 1 and the cell 2. Specifically, for example, if the CIF associated with the SS3 is 4 and 7, and the CIFs of the cell 1 and the cell 2 are 4, the cell 4 may jointly schedule the cell 1 and the cell 2 by using the SS3.

### Embodiment 8

In this embodiment, an SS configuration directly or indirectly indicates that the terminal needs to monitor a cell group, or indicates that an SS is used for joint scheduling.

In this embodiment, for example, if a scheduling cell 0 may jointly schedule a cell 1 and a cell 2, a configuration of the cell 0 includes a full configuration of a search space 3 (SS3), and the configuration of the SS3 indicates that a cell group to be jointly scheduled needs to be monitored, the cell 0 may jointly schedule the cell 1 and the cell 2 by using the SS3.

In this embodiment, for example, if a scheduling cell 0 may jointly schedule a cell 1 and a cell 2, a configuration of the cell 0 includes a full configuration of a search space 3 (SS3), and the configuration of the SS3 includes a related parameter of joint control information, the cell 0 may jointly schedule the cell 1 and the cell 2 by using the SS3.

In this embodiment, for example, if a scheduling cell 0 may jointly schedule a cell 1 and a cell 2, a configuration of the cell 0 includes a full configuration of a search space 3 (SS3), and the configuration of the SS3 indicates that it may be used for joint scheduling, for example, indicates that a joint scheduling function is enabled, the cell 0 may jointly schedule the cell 1 and the cell 2 by using the SS3.

The foregoing describes in detail the joint scheduling method according to this embodiment of this application with reference to FIG. 2. The following describes in detail a joint scheduling method according to another embodiment of this application with reference to FIG. 7. It can be understood that interaction between a network side device and a terminal described from the perspective of the network side device is the same as that described on the terminal side in the method shown in FIG. 2. To avoid repetition, the related descriptions are appropriately omitted.

FIG. 7 is a schematic flowchart of a joint scheduling method according to an embodiment of this application. The method may be applied to a network side device. As shown in FIG. 7, the method 700 includes the following steps.

S702: A network side device configures a first scheduling object and a first scheduled object group for a terminal, where the terminal is configured to monitor joint control information on the first scheduling object; and the first scheduling object at least supports scheduling the first scheduled object group, the first scheduled object group includes at least one scheduled object, and the joint control information supports scheduling at least two scheduled objects.

According to the joint scheduling method provided in this embodiment of this application, the network side device configures the first scheduling object and the first scheduled object group for the terminal, where the terminal is configured to monitor the joint control information on the first scheduling object, the first scheduling object at least supports scheduling the first scheduled object group, the first scheduled object group includes at least one scheduled object, and the joint control information supports scheduling at least two scheduled objects. In this embodiment of this application, consistency between the terminal and the network side device in understanding a scheduling object and a scheduled object is maintained, thereby avoiding a transmission problem caused by inconsistent understanding, and improving communication validity.

Optionally, in an embodiment, that a network side device configures a first scheduling object for a terminal includes at least one of the following (1) to (5).
(1) The network side device sends an object configuration, where the object configuration is associated with the first scheduling object, and the scheduled object in the first scheduled object group includes an object corresponding to the object configuration.
(2) The network side device sends at least one scheduled object configuration, where the scheduled object configuration is associated with the first scheduling object, and the scheduled object in the first scheduled object group includes a scheduled object corresponding to the scheduled object configuration.
(3) The network side device sends a first scheduled object group configuration, where the first scheduled object group configuration is associated with the first scheduling object.
(4) The network side device sends a scheduling object configuration, where the scheduling object configuration is associated with the first scheduling object.
(5) The network side device sends a scheduling object configuration, where the scheduling object configuration indicates that the first scheduling object supports or enables joint scheduling.

Optionally, in an embodiment, that a network side device configures a first scheduled object group for a terminal includes at least one of the following (1) to (3).
(1) The network side device sends configuration information, where the configuration information configures or indicates the first scheduled object group.
(2) The network side device sends a first scheduling object configuration, where the first scheduling object configuration is associated with the first scheduled object group.
(3) The network side device sends a first scheduling object configuration, where the first scheduling object configuration is associated with a scheduled object, and the associated scheduled object forms the first scheduled object group.

Optionally, in an embodiment, that a network side device configures a first scheduled object group for a terminal includes at least one of the following (a) to (c).
(a) The network side device sends an object configuration, where the object configuration is associated with the first scheduling object, and an object corresponding to the object configuration forms the first scheduled object group.
(b) The network side device sends a scheduled object configuration, where the scheduled object configuration is associated with the first scheduling object, and a scheduled object corresponding to the scheduled object configuration forms the first scheduled object group.
(c) The network side device sends a scheduled object group configuration, where the scheduled object group configuration is associated with the first scheduling object, and a scheduled object corresponding to the scheduled object group configuration forms the first scheduled object group.

Optionally, in an embodiment, that a network side device configures a first scheduled object group for a terminal includes at least one of the following (1) and (2).
(1) The network side device sends an object configuration and a first scheduling object configuration, where an object corresponding to the object configuration is associated with the first scheduling object, the first scheduling object configuration indicates the object, and the first scheduled object group includes the object.
(2) The network side device sends a scheduled object group configuration and a first scheduling object configuration, where a scheduled object or a scheduled object group corresponding to the scheduled object group configuration is associated with the first scheduling object, the first scheduling object configuration indicates the scheduled object or the scheduled object group, and the first scheduled object group includes the scheduled object or the scheduled object group.

Optionally, in an embodiment, that a network side device configures a first scheduled object group for a terminal includes at least one of the following (a) and (b).
(a) The network side device sends an object configuration, where the object configuration is associated with the first scheduling object, and an object corresponding to the object configuration and corresponding to same carrier indication information forms the first scheduled object group.
(b) The network side device sends a scheduled object group configuration, where the scheduled object group configuration is associated with the first scheduling object, and a scheduled object corresponding to the scheduled object group configuration and corresponding to same carrier indication information forms the first scheduled object group.

Optionally, in an embodiment, that a network side device configures a first scheduled object group for a terminal includes at least one of the following (1) and (2).
(1) The network side device sends an object configuration, where the object configuration corresponds to one scheduled object of the first scheduling object, and the first scheduled object group is the one scheduled object.
(2) The network side device sends a scheduled object group configuration, where the scheduled object group configuration corresponds to one scheduled object of the first scheduling object, and the first scheduled object group is the one scheduled object.

Optionally, in an embodiment, the method meets at least one of the following (a) and (b): (a) that the object configuration is associated with the first scheduling object includes: the object configuration indicates the first scheduling object; or the carrier indication information of the object corresponding to the object configuration indicates the first scheduling object; and/or (b) that the scheduled object group configuration is associated with the first scheduling object includes: the scheduled object group configuration indicates the first scheduling object; or the carrier indication information of the scheduled object corresponding to the scheduled object group configuration indicates the first scheduling object.

Optionally, in an embodiment, the carrier indication information meets at least one of the following: (1) the carrier indication information is configured by a network side device; and (2) the carrier indication information is determined according to carrier indication information of one or more scheduled objects, where the carrier indication information includes at least one of the following: carrier indication information of an object, carrier indication information of a scheduled object, and carrier indication information of the first scheduled object group.

In an embodiment, the method further includes: sending, by the network side device, a first scheduled object group configuration, where the first scheduled object group configuration meets at least one of the following (1) to (5).
(1) The first scheduled object group configuration is associated with at least two objects.
(2) The first scheduled object group configuration is associated with at least one scheduling object.
(3) The first scheduled object group configuration is associated with one or more scheduled object groups.
(4) The first scheduled object group configuration is included in a first scheduling object configuration.
(5) The first scheduled object group configuration includes an identifier of the first scheduling object.

Optionally, in an embodiment, the method further includes: sending, by the network side device, a first scheduling object configuration, where the first scheduling object configuration meets at least one of the following (1) to (3).
(1) The first scheduling object configuration indicates that a scheduling object corresponding to the first scheduling object configuration supports or enables joint scheduling.
(2) The first scheduling object configuration includes a first scheduled object group configuration.
(3) The first scheduling object configuration includes a configuration of at least one scheduled object in the first scheduled object group.

Optionally, in an embodiment, the method further includes: sending, by the network side device, an object configuration, where the object configuration meets: the object configuration includes an identifier of a first scheduled object, and an object corresponding to the object configuration is associated with the first scheduled object.

Optionally, in an embodiment, the configuring, by a network side device, a first scheduled object group for a terminal includes: sending, by the network side device, a first scheduling object configuration and a first scheduled object configuration, where the first scheduling object configuration includes information about a scheduled object whose scheduling is supported by the first scheduling object, and the first scheduled object configuration includes information about a scheduling object that can schedule the first scheduled object group.

Optionally, in an embodiment, the method further includes: sending, by the network side device, blind detection information, where the blind detection information indicates at least one of the following (1) to (4).
(1) A quantity of blind detection times for the one or more first scheduled object groups.
(2) An aggregation level for the one or more first scheduled object groups.
(3) A quantity of blind detection times for at least one scheduled object in each of the one or more first scheduled object groups.
(4) An aggregation level for at least one scheduled object in each of the one or more first scheduled object groups.

It should be noted that, the joint scheduling method provided in the embodiments of this application may be performed by a joint scheduling apparatus, or a control module that is in the joint scheduling apparatus and that is configured to perform the joint scheduling method. In the embodiments of this application, an example in which the joint scheduling apparatus performs the joint scheduling method is used to describe the joint scheduling apparatus provided in the embodiments of this application.

FIG. 8 is a schematic structural diagram of a joint scheduling apparatus according to an embodiment of this application. The apparatus may correspond to a terminal in another embodiment. As shown in FIG. 8, an apparatus 800 includes the following modules:
a determining module 802, configured to determine a first scheduling object and a first scheduled object group; and
a monitoring module 804, configured to monitor joint control information on the first scheduling object, where the first scheduling object at least supports scheduling the first scheduled object group, the first scheduled object group includes at least one scheduled object, and the joint control information supports scheduling at least two scheduled objects.

According to the apparatus provided in this embodiment of this application, the determining module determines the first scheduling object and the first scheduled object group, and the monitoring module monitors the joint control information on the first scheduling object, where the first scheduling object at least supports scheduling the first scheduled object group, the first scheduled object group includes at least one scheduled object, and the joint control information supports scheduling at least two scheduled objects. In this embodiment of this application, consistency between the terminal and the network side device in understanding a scheduling object and a scheduled object is maintained, thereby avoiding a transmission problem caused by inconsistent understanding, and improving communication validity.

Optionally, in an embodiment, the determining module 802 may be configured to perform at least one of the following (1) to (5):
(1) Obtain an object configuration, where the object configuration is associated with the first scheduling object, and the scheduled object in the first scheduled object group includes an object corresponding to the object configuration.
(2) Obtain at least one scheduled object configuration, where the scheduled object configuration is associated with the first scheduling object, and the scheduled object in the first scheduled object group includes a scheduled object corresponding to the scheduled object configuration.
(3) Obtain a first scheduled object group configuration, where the first scheduled object group configuration is associated with the first scheduling object.
(4) Obtain a scheduling object configuration, where the scheduling object configuration is associated with the first scheduling object.
(5) Obtain a scheduling object configuration, where the scheduling object configuration indicates that the first scheduling object supports or enables joint scheduling.

Optionally, in an embodiment, the determining module 802 may be configured to perform at least one of the following (a) to (c):
(a) Obtain configuration information, where the configuration information configures or indicates the first scheduled object group.
(b) Obtain a first scheduling object configuration, where the first scheduling object configuration is associated with the first scheduled object group.
(c) Obtain a first scheduling object configuration, where the first scheduling object configuration is associated with a scheduled object, and the associated scheduled object forms the first scheduled object group.

Optionally, in an embodiment, the determining module 802 may be configured to perform at least one of the following (1) to (3):
(1) Obtain an object configuration, where the object configuration is associated with the first scheduling object, and an object corresponding to the object configuration forms the first scheduled object group.
(2) Obtain a scheduled object configuration, where the scheduled object configuration is associated with the first scheduling object, and a scheduled object corresponding to the scheduled object configuration forms the first scheduled object group.
(3) Obtain a scheduled object group configuration, where the scheduled object group configuration is associated with the first scheduling object, and a scheduled object corresponding to the scheduled object group configuration forms the first scheduled object group.

Optionally, in an embodiment, the determining module 802 may be configured to perform at least one of the following (1) and (2):
(1) Obtain an object configuration and a first scheduling object configuration, where an object corresponding to the object configuration is associated with the first scheduling object, the first scheduling object configuration indicates the object, and the first scheduled object group includes the object.
(2) Obtain a scheduled object group configuration and a first scheduling object configuration, where a scheduled object or a scheduled object group corresponding to the scheduled object group configuration is associated with the first scheduling object, the first scheduling object configuration indicates the scheduled object or the scheduled object group, and the first scheduled object group includes the scheduled object or the scheduled object group.

Optionally, in an embodiment, the determining module 802 may be configured to perform at least one of the following (a) and (b):
(a) Obtain an object configuration, where the object configuration is associated with the first scheduling object, and an object corresponding to the object configuration and corresponding to same carrier indication information forms the first scheduled object group.
(b) Obtain a scheduled object group configuration, where the scheduled object group configuration is associated with the first scheduling object, and a scheduled object corresponding to the scheduled object group configuration and corresponding to same carrier indication information forms the first scheduled object group.

Optionally, in an embodiment, the determining module 802 may be configured to perform at least one of the following (1) and (2):
(1) Obtain an object configuration, where the object configuration corresponds to one scheduled object of the first scheduling object, and the first scheduled object group is the one scheduled object.
(2) Obtain a scheduled object group configuration, where the scheduled object group configuration corresponds to one scheduled object of the first scheduling object, and the first scheduled object group is the one scheduled object.

Optionally, in an embodiment, the apparatus meets at least one of the following: (a) that the object configuration is associated with the first scheduling object includes: the object configuration indicates the first scheduling object; or the carrier indication information of the object corresponding to the object configuration indicates the first scheduling object; and/or (b) that the scheduled object group configuration is associated with the first scheduling object includes: the scheduled object group configuration indicates the first scheduling object; or the carrier indication information of the scheduled object corresponding to the scheduled object group configuration indicates the first scheduling object.

Optionally, in an embodiment, the carrier indication information meets at least one of the following: (1) the carrier indication information is configured by a network side device; and (2) the carrier indication information is determined according to carrier indication information of one or more scheduled objects, where the carrier indication information includes at least one of the following: carrier indication information of an object, carrier indication information of a scheduled object, and carrier indication information of the first scheduled object group.

In an embodiment, the determining module 802 may be further configured to obtain a first scheduled object group configuration, where the first scheduled object group configuration meets at least one of the following (1) to (5):
(1) The first scheduled object group configuration is associated with at least two objects.
(2) The first scheduled object group configuration is associated with at least one scheduling object.
(3) The first scheduled object group configuration is associated with one or more scheduled object groups.
(4) The first scheduled object group configuration is included in a first scheduling object configuration.
(5) The first scheduled object group configuration includes an identifier of the first scheduling object.

Optionally, in an embodiment, the determining module 802 may be further configured to obtain a first scheduling object configuration, where the first scheduling object configuration meets at least one of the following (1) to (3):
(1) The first scheduling object configuration indicates that a scheduling object corresponding to the first scheduling object configuration supports or enables joint scheduling.
(2) The first scheduling object configuration includes a first scheduled object group configuration.
(3) The first scheduling object configuration includes a configuration of at least one scheduled object in the first scheduled object group.

Optionally, in an embodiment, the determining module 802 may be further configured to obtain an object configuration, where the object configuration meets: the object configuration includes an identifier of a first scheduled object, and an object corresponding to the object configuration is associated with the first scheduled object.

Optionally, in an embodiment, the determining module 802 may be configured to receive a first scheduling object configuration and a first scheduled object configuration, where the first scheduling object configuration includes information about a scheduled object whose scheduling is supported by the first scheduling object, and the first scheduled object configuration includes information about a scheduling object that can schedule the first scheduled object group.

Optionally, in an embodiment, the determining module 802 may be further configured to obtain blind detection information, where the blind detection information indicates at least one of the following (1) to (4):
(1) A quantity of blind detection times for the one or more first scheduled object groups.
(2) An aggregation level for the one or more first scheduled object groups.
(3) A quantity of blind detection times for at least one scheduled object in each of the one or more first scheduled object groups.
(4) An aggregation level for at least one scheduled object in each of the one or more first scheduled object groups.

The apparatus 800 according to this embodiment of this application may correspond to the procedures of the method 200 in the embodiments of this application, and the units/modules in the apparatus 800 and the foregoing operations and/or functions are separately for implementing the corresponding procedures of the method 200, and can achieve a same or equivalent technical effect. For brevity, details are not described herein again.

The joint scheduling apparatus in this embodiment of this application may be an apparatus, an apparatus or an electronic device with an operating system, or a component, an integrated circuit, or a chip in a terminal. The apparatus or the electronic device may be a mobile terminal or a non-mobile terminal. For example, the mobile terminal may include but is not limited to the foregoing listed types of the terminal 11. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The joint scheduling apparatus provided in this embodiment of this application can implement the processes implemented in the method embodiments of FIG. 2 to FIG. 7, and achieve a same technical effect. To avoid repetition, details are not described herein again.

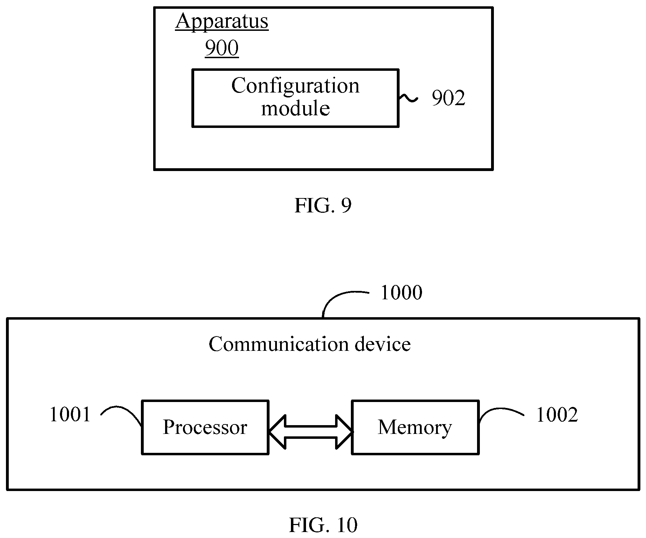

FIG. 9 is a schematic structural diagram of a joint scheduling apparatus according to an embodiment of this application. The apparatus may correspond to a network side device in another embodiment. As shown in FIG. 9, an apparatus 900 includes the following modules:
a configuration module 902, configured to configure a first scheduling object and a first scheduled object group for a terminal, where the terminal is configured to monitor joint control information on the first scheduling object; and the first scheduling object at least supports scheduling the first scheduled object group, the first scheduled object group includes at least one scheduled object, and the joint control information supports scheduling at least two scheduled objects.

According to the joint scheduling apparatus provided in this embodiment of this application, the configuration module configures the first scheduling object and the first scheduled object group for the terminal, where the terminal is configured to monitor the joint control information on the first scheduling object; and the first scheduling object at least supports scheduling the first scheduled object group, the first scheduled object group includes at least one scheduled object, and the joint control information supports scheduling at least two scheduled objects. In this embodiment of this application, consistency between the terminal and the network side device in understanding a scheduling object and a scheduled object is maintained, thereby avoiding a transmission problem caused by inconsistent understanding, and improving communication validity.

Optionally, in an embodiment, the configuration module 902 may be configured to perform at least one of the following (1) to (5).
(1) Send an object configuration, where the object configuration is associated with the first scheduling object, and the scheduled object in the first scheduled object group includes an object corresponding to the object configuration.
(2) Send at least one scheduled object configuration, where the scheduled object configuration is associated with the first scheduling object, and the scheduled object in the first scheduled object group includes a scheduled object corresponding to the scheduled object configuration.
(3) Send a first scheduled object group configuration, where the first scheduled object group configuration is associated with the first scheduling object.
(4) Send a scheduling object configuration, where the scheduling object configuration is associated with the first scheduling object.
(5) Send a scheduling object configuration, where the scheduling object configuration indicates that the first scheduling object supports or enables joint scheduling.

Optionally, in an embodiment, the configuration module 902 may be configured to perform at least one of the following (a) to (c).
(a) Send configuration information, where the configuration information configures or indicates the first scheduled object group.
(b) Send a first scheduling object configuration, where the first scheduling object configuration is associated with the first scheduled object group.
(c) Send a first scheduling object configuration, where the first scheduling object configuration is associated with a scheduled object, and the associated scheduled object forms the first scheduled object group.

Optionally, in an embodiment, the configuration module 902 may be configured to perform at least one of the following (1) to (3).
(1) Send an object configuration, where the object configuration is associated with the first scheduling object, and an object corresponding to the object configuration forms the first scheduled object group.
(2) Send a scheduled object configuration, where the scheduled object configuration is associated with the first scheduling object, and a scheduled object corresponding to the scheduled object configuration forms the first scheduled object group.
(3) Send a scheduled object group configuration, where the scheduled object group configuration is associated with the first scheduling object, and a scheduled object corresponding to the scheduled object group configuration forms the first scheduled object group.

Optionally, in an embodiment, the configuration module 902 may be configured to perform at least one of the following (1) and (2).
(1) Send an object configuration and a first scheduling object configuration, where an object corresponding to the object configuration is associated with the first scheduling object, the first scheduling object configuration indicates the object, and the first scheduled object group includes the object.
(2) Send a scheduled object group configuration and a first scheduling object configuration, where a scheduled object or a scheduled object group corresponding to the scheduled object group configuration is associated with the first scheduling object, the first scheduling object configuration indicates the scheduled object or the scheduled object group, and the first scheduled object group includes the scheduled object or the scheduled object group.

Optionally, in an embodiment, the configuration module 902 may be configured to perform at least one of the following (a) and (b).
(a) Send an object configuration, where the object configuration is associated with the first scheduling object, and an object corresponding to the object configuration and corresponding to same carrier indication information forms the first scheduled object group.
(b) Send a scheduled object group configuration, where the scheduled object group configuration is associated with the first scheduling object, and a scheduled object corresponding to the scheduled object group configuration and corresponding to same carrier indication information forms the first scheduled object group.

Optionally, in an embodiment, the configuration module 902 may be configured to perform at least one of the following (1) and (2).
(1) Send an object configuration, where the object configuration corresponds to one scheduled object of the first scheduling object, and the first scheduled object group is the one scheduled object.
(2) Send a scheduled object group configuration, where the scheduled object group configuration corresponds to one scheduled object of the first scheduling object, and the first scheduled object group is the one scheduled object.

Optionally, in an embodiment, at least one of the following (a) and (b) is met: (a) that the object configuration is associated with the first scheduling object includes: the object configuration indicates the first scheduling object; or the carrier indication information of the object corresponding to the object configuration indicates the first scheduling object; and/or (b) that the scheduled object group configuration is associated with the first scheduling object includes: the scheduled object group configuration indicates the first scheduling object; or the carrier indication information of the scheduled object corresponding to the scheduled object group configuration indicates the first scheduling object.

Optionally, in an embodiment, the carrier indication information meets at least one of the following: (1) the carrier indication information is configured by a network side device; and (2) the carrier indication information is determined according to carrier indication information of one or more scheduled objects, where the carrier indication information includes at least one of the following: carrier indication information of an object, carrier indication information of a scheduled object, and carrier indication information of the first scheduled object group.

In an embodiment, the configuration module 902 may be further configured to send a first scheduled object group configuration, where the first scheduled object group configuration meets at least one of the following (1) to (5).
(1) The first scheduled object group configuration is associated with at least two objects.
(2) The first scheduled object group configuration is associated with at least one scheduling object.
(3) The first scheduled object group configuration is associated with one or more scheduled object groups.
(4) The first scheduled object group configuration is included in a first scheduling object configuration.
(5) The first scheduled object group configuration includes an identifier of the first scheduling object.

Optionally, in an embodiment, the configuration module 902 may be further configured to send a first scheduling object configuration, where the first scheduling object configuration meets at least one of the following (a) to (c).
(a) The first scheduling object configuration indicates that a scheduling object corresponding to the first scheduling object configuration supports or enables joint scheduling.
(b) The first scheduling object configuration includes a first scheduled object group configuration.
(c) The first scheduling object configuration includes a configuration of at least one scheduled object in the first scheduled object group.

Optionally, in an embodiment, the configuration module 902 may be further configured to send an object configuration, where the object configuration meets: the object configuration includes an identifier of a first scheduled object, and an object corresponding to the object configuration is associated with the first scheduled object.

Optionally, in an embodiment, the configuration module 902 may be configured to send a first scheduling object configuration and a first scheduled object configuration, where the first scheduling object configuration includes information about a scheduled object whose scheduling is supported by the first scheduling object, and the first scheduled object configuration includes information about a scheduling object that can schedule the first scheduled object group.

Optionally, in an embodiment, the configuration module 902 may be further configured to send blind detection information, where the blind detection information indicates at least one of the following (1) to (4):
(1) A quantity of blind detection times for the one or more first scheduled object groups.
(2) An aggregation level for the one or more first scheduled object groups.
(3) A quantity of blind detection times for at least one scheduled object in each of the one or more first scheduled object groups.
(4) An aggregation level for at least one scheduled object in each of the one or more first scheduled object groups.

The apparatus 900 according to this embodiment of this application may correspond to the procedures of the method 700 in the embodiments of this application, and the units/modules in the apparatus 900 and the foregoing operations and/or functions are separately for implementing the corresponding procedures of the method 700, and can achieve a same or equivalent technical effect. For brevity, details are not described herein again.

Optionally, as shown in FIG. 10, an embodiment of this application further provides a communication device 1000, including a processor 1001, a memory 1002, and a program or an instruction that is stored in the memory 1002 and that can be run on the processor 1001. For example, when the communication device 1000 is a terminal, the program or the instruction is executed by the processor 1001 to implement the processes of the foregoing joint scheduling method embodiment, and a same technical effect can be achieved. When the communication device 1000 is a network side device, the program or the instruction is executed by the processor 1001 to implement the processes of the foregoing joint scheduling method embodiment, and a same technical effect can be achieved. To avoid repetition, details are not described herein again.

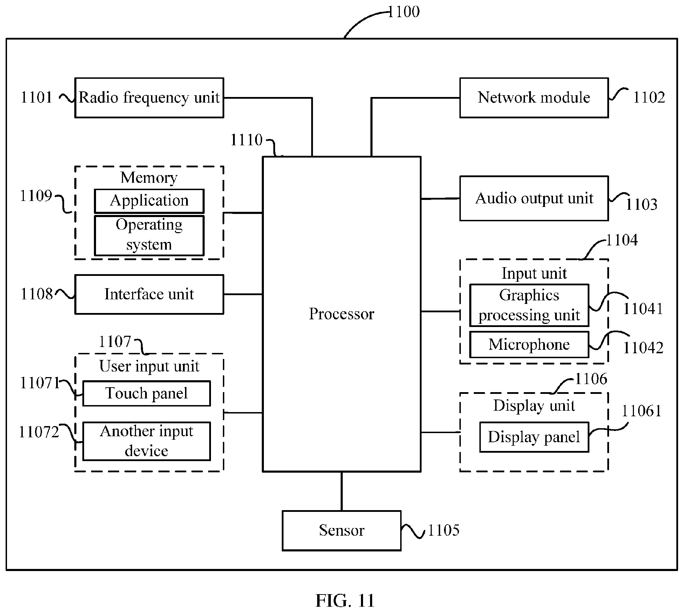

An embodiment of this application further provides a terminal, including a processor and a communication interface. The processor is configured to determine a first scheduling object and a first scheduled object group, and the communication interface is configured to monitor joint control information on the first scheduling object, where the first scheduling object at least supports scheduling the first scheduled object group, the first scheduled object group includes at least one scheduled object, and the joint control information supports scheduling at least two scheduled objects. This terminal embodiment corresponds to the foregoing method embodiment on the terminal side. Each implementation process and implementation of the foregoing method embodiment may be applicable to this terminal embodiment, and a same technical effect can be achieved. Specifically, FIG. 11 is a schematic diagram of a hardware structure of a terminal according to an embodiment of this application.

A terminal 1100 includes but is not limited to components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the terminal 1100 may further include the power supply (for example, a battery) that supplies power to each component. The power supply may be logically connected to the processor 1110 by using a power supply management system, so as to manage functions such as charging, discharging, and power consumption by using the power supply management system. The terminal structure shown in FIG. 11 constitutes no limitation on the terminal, and the terminal may include more or fewer components than those shown in the figure, or combine some components, or have different component arrangements. Details are not described herein.

It should be understood that, in this embodiment of this application, the input unit 1104 may include a graphics processing unit (Graphics Processing Unit, GPU) 11041 and a microphone 11042, and the graphics processing unit 11041 processes image data of a still image or a video that is obtained by an image capturing apparatus (for example, a camera) in a video capturing mode or an image capturing mode. The display unit 1106 may include a display panel 11061. The display panel 11061 may be configured in a form such as a liquid crystal display or an organic light-emitting diode. The user input unit 1107 may include a touch panel 11071 and another input device 11072. The touch panel 11071 is also referred to as a touchscreen. The touch panel 11071 may include two parts: a touch detection apparatus and a touch controller. The another input device 11072 may include but is not limited to a physical keyboard, a functional button (such as a volume control button or a power on/off button), a trackball, a mouse, and a joystick. Details are not described herein.

In this embodiment of this application, the radio frequency unit 1101 receives downlink data from a network side device and then sends the downlink data to the processor 1110 for processing; and sends uplink data to the network side device. Usually, the radio frequency unit 1101 includes but is not limited to an antenna, at least one amplifier, a transceiver, a coupler, a low noise amplifier, a duplexer, and the like.

The memory 1109 may be configured to store a software program or an instruction and various data. The memory 1109 may mainly include a program or instruction storage area and a data storage area. The program or instruction storage area may store an operating system, and an application or an instruction required by at least one function (for example, a sound playing function or an image playing function). In addition, the memory 1109 may include a high-speed random access memory, and may further include a non-transient memory. The non-transient memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transient solid-state storage device.

The processor 1110 may include one or more processing units. Optionally, an application processor and a modem processor may be integrated into the processor 1110. The application processor mainly processes an operating system, a user interface, an application, an instruction, or the like. The modem processor mainly processes wireless communication, for example, a baseband processor. It can be understood that, alternatively, the modem processor may not be integrated into the processor 1110.

The processor 1110 may be configured to determine a first scheduling object and a first scheduled object group.

The radio frequency unit 1101 may be configured to monitor joint control information on the first scheduling object, where the first scheduling object at least supports scheduling the first scheduled object group, the first scheduled object group includes at least one scheduled object, and the joint control information supports scheduling at least two scheduled objects.

In this embodiment of this application, the terminal determines the first scheduling object and the first scheduled object group, and monitors the joint control information on the first scheduling object, where the first scheduling object at least supports scheduling the first scheduled object group, the first scheduled object group includes at least one scheduled object, and the joint control information supports scheduling at least two scheduled objects. In this embodiment of this application, consistency between the terminal and the network side device in understanding a scheduling object and a scheduled object is maintained, thereby avoiding a transmission problem caused by inconsistent understanding, and improving communication validity.

The terminal 1100 provided in this embodiment of this application may further implement the processes of the foregoing joint scheduling method embodiment, and a same technical effect can be achieved. To avoid repetition, details are not described herein again.

An embodiment of this application further provides a network side device, including a processor and a communication interface. The communication interface is configured to configure a first scheduling object and a first scheduled object group for a terminal, where the terminal is configured to monitor joint control information on the first scheduling object; and the first scheduling object at least supports scheduling the first scheduled object group, the first scheduled object group includes at least one scheduled object, and the joint control information supports scheduling at least two scheduled objects. This network side device embodiment corresponds to the foregoing method embodiment of the network side device. Each implementation process and implementation of the foregoing method embodiment may be applicable to this network side device embodiment, and a same technical effect can be achieved.

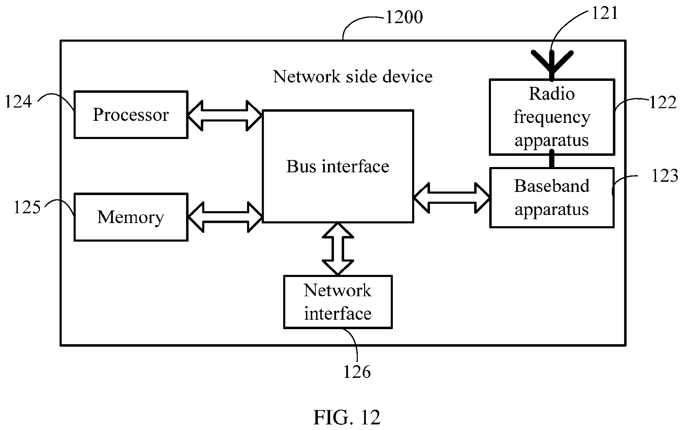

Specifically, an embodiment of this application further provides a network side device. As shown in FIG. 12, a network side device 1200 includes an antenna 121, a radio frequency apparatus 122, and a baseband apparatus 123. The antenna 121 is connected to the radio frequency apparatus 122. In an uplink direction, the radio frequency apparatus 122 receives information by using the antenna 121, and sends the received information to the baseband apparatus 123 for processing. In a downlink direction, the baseband apparatus 123 processes information that needs to be sent, and sends processed information to the radio frequency apparatus 122. The radio frequency apparatus 122 processes the received information, and sends processed information by using the antenna 121.

The band processing apparatus may be located in the baseband apparatus 123. The method performed by the network side device in the foregoing embodiment may be implemented in the baseband apparatus 123. The baseband apparatus 123 includes a processor 124 and a memory 125.

The baseband apparatus 123 may include, for example, at least one baseband board, where a plurality of chips are disposed on the baseband board. As shown in FIG. 12, one chip, for example, the processor 124, is connected to the memory 125, to invoke a program in the memory 125 to perform the operations of the network side device shown in the foregoing method embodiment.

The baseband apparatus 123 may further include a network interface 126, configured to exchange information with the radio frequency apparatus 122. For example, the interface is a common public radio interface (Common Public Radio Interface, CPRI).

Specifically, the network side device in this embodiment of this application further includes an instruction or a program that is stored in the memory 125 and that can be run on the processor 124. The processor 124 invokes the instruction or the program in the memory 125 to perform the method performed by the modules shown in FIG. 9, and a same technical effect is achieved. To avoid repetition, details are not described herein again.

An embodiment of this application further provides a readable storage medium. The readable storage medium stores a program or an instruction, and the program or the instruction is executed by a processor to implement the processes in the foregoing joint scheduling method embodiment, and a same technical effect can be achieved. To avoid repetition, details are not described herein again.

The processor may be a processor in the terminal in the foregoing embodiment. The readable storage medium includes a computer readable storage medium, for example, a read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes of the foregoing joint scheduling method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product, where the computer program product is stored in a non-volatile memory, and the computer program product is executed by at least one processor to implement the processes of the foregoing joint scheduling method embodiment, and a same technical effect can be achieved. To avoid repetition, details are not described herein again.

An embodiment of this application further provides a communication device, configured to perform the processes of the foregoing joint scheduling method embodiment, and a same technical effect can be achieved. To avoid repetition, details are not described herein again.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a network side device, or the like) to perform the methods described in the embodiments of this application.

The embodiments of this application are described above with reference to the accompanying drawings, but this application is not limited to the above specific implementations, and the above specific implementations are merely illustrative but not restrictive.

## Claims

1. A joint scheduling method, **characterized by** comprising:
determining (S202), by a terminal, a first scheduling cell and a first scheduled cell group; and
monitoring (S204), by the terminal, joint control information on the first scheduling cell, wherein
the first scheduling cell at least supports scheduling the first scheduled cell group, the first scheduled cell group comprises at least two scheduled cells capable of being jointly scheduled by the first scheduling cell, and the joint control information supports scheduling at least two scheduled cells,
wherein the method further comprises: obtaining, by the terminal, a first scheduled cell group configuration, wherein the first scheduled cell group configuration meets at least one of the following:
the first scheduled cell group configuration is comprised in a first scheduling cell configuration; and
the first scheduled cell group configuration is associated with at least one scheduling cell.

2. The method according to claim 1, wherein the determining (S202), by a terminal, a first scheduling cell comprises:
obtaining, by the terminal, a scheduling cell configuration, wherein the scheduling cell configuration indicates that the first scheduling cell supports or enables joint scheduling.

3. The method according to claim 1 or 2, wherein the determining (S202), by a terminal, a first scheduled cell group comprises:
obtaining, by the terminal, a first scheduling cell configuration, wherein the first scheduling cell configuration is associated with the first scheduled cell group.

4. The method according to claim 1, wherein the first scheduled cell group configuration being comprised in the first scheduling cell configuration comprises: identifiers of the at least two scheduled cells being comprised in the first scheduling cell configuration.

5. The method according to claim 1, wherein the method further comprises: obtaining, by the terminal, a first scheduling cell configuration, wherein the first scheduling cell configuration meets at least one of the following:
the first scheduling cell configuration indicates that a scheduling cell corresponding to the first scheduling cell configuration supports or enables joint scheduling;
the first scheduling cell configuration comprises a first scheduled cell group configuration; and
the first scheduling cell configuration comprises a configuration of at least one scheduled cell in the first scheduled cell group.

6. The method according to claim 1, wherein the method further comprises: obtaining, by the terminal, blind detection information, wherein the blind detection information indicates at least one of the following:
a quantity of blind detection times for the one or more first scheduled cell groups;
an aggregation level for the one or more first scheduled cell groups;
a quantity of blind detection times for at least one scheduled cell in each of the one or more first scheduled cell groups; and
an aggregation level for at least one scheduled cell in each of the one or more first scheduled cell groups.

7. A joint scheduling method, **characterized by** comprising:
configuring (S702), by a network side device, a first scheduling cell and a first scheduled cell group for a terminal, wherein
the first scheduling cell is used for the monitoring of joint control information; and the first scheduling cell at least supports scheduling the first scheduled cell group, the first scheduled cell group comprises at least two scheduled cells capable of being jointly scheduled by the first scheduling cell, and the joint control information supports scheduling at least two scheduled cells,
wherein the method further comprises: sending, by the network side device, a first scheduled cell group configuration, wherein the first scheduled cell group configuration meets at least one of the following:
the first scheduled cell group configuration is comprised in a first scheduling cell configuration; and
the first scheduled cell group configuration is associated with at least one scheduling cell.

8. The method according to claim 7, wherein the configuring (S702), by a network side device, a first scheduling cell for a terminal comprises:
sending, by the network side device, a scheduling cell configuration, wherein the scheduling cell configuration indicates that the first scheduling cell supports or enables joint scheduling.

9. The method according to claim 7 or 8, wherein the configuring (S702), by a network side device, a first scheduled cell group for a terminal comprises:
sending, by the network side device, a first scheduling cell configuration, wherein the first scheduling cell configuration is associated with the first scheduled cell group.

10. The method according to claim 7, wherein the first scheduled cell group configuration being comprised in the first scheduling cell configuration comprises: identifiers of the at least two scheduled cells being comprised in the first scheduling cell configuration.

11. The method according to claim 7, wherein the method further comprises: sending, by the network side device, a first scheduling cell configuration, wherein the first scheduling cell configuration meets at least one of the following:
the first scheduling cell configuration indicates that a scheduling cell corresponding to the first scheduling cell configuration supports or enables joint scheduling;
the first scheduling cell configuration comprises a first scheduled cell group configuration; and
the first scheduling cell configuration comprises a configuration of at least one scheduled cell in the first scheduled cell group.

12. The method according to claim 7, wherein the method further comprises: sending, by the network side device, blind detection information, wherein the blind detection information indicates at least one of the following:
a quantity of blind detection times for the one or more first scheduled cell groups;
an aggregation level for the one or more first scheduled cell groups;
a quantity of blind detection times for at least one scheduled cell in each of the one or more first scheduled cell groups; and
an aggregation level for at least one scheduled cell in each of the one or more first scheduled cell groups.

13. A terminal, **characterized by** comprising a processor, a memory, and a program or an instruction that is stored in the memory and that can be run on the processor, wherein the program or the instruction is executed by the processor to implement the joint scheduling method according to any one of claims 1 to 6.

14. A network side device, **characterized by** comprising a processor, a memory, and a program or an instruction that is stored in the memory and that can be run on the processor, wherein the program or the instruction is executed by the processor to implement the joint scheduling method according to any one of claims 7 to 12.

15. A readable storage medium, **characterized in that** the readable storage medium stores a program or an instruction, and the program or the instruction is executed by a processor to implement the joint scheduling method according to any one of claims 1 to 6 or the joint scheduling method according to any one of claims 7 to 12.

## Patentansprüche

1. Gemeinsames Planungsverfahren, **dadurch gekennzeichnet, dass** es umfasst:
Bestimmen (S202), durch ein Terminal, einer ersten Planungszelle und einer ersten geplanten Zellengruppe; und
Überwachen (S204), durch das Terminal, gemeinsamer Steuerungsinformation an der ersten Planungszelle, wobei
die erste Planungszelle mindestens das Planen der ersten geplanten Zellengruppe unterstützt, die erste geplante Zellengruppe mindestens zwei geplante Zellen umfasst, deren gemeinsame Planung durch die erste Planungszelle möglich ist, und die gemeinsame Steuerungsinformation das Planen von mindestens zwei geplanten Zellen unterstützt,
wobei das Verfahren ferner umfasst: Erhalten, durch das Terminal, einer ersten geplanten Zellengruppenkonfiguration, wobei die erste geplante Zellengruppenkonfiguration mindestens eins von dem Folgenden erfüllt:
die erste geplante Zellengruppenkonfiguration ist in einer ersten Planungszellenkonfiguration enthalten; und
die erste geplante Zellengruppenkonfiguration ist mit mindestens einer Planungszelle assoziiert.

2. Verfahren nach Anspruch 1, wobei das Bestimmen (S202), durch ein Terminal, einer ersten Planungszelle umfasst:
Erhalten, durch das Terminal, einer Planungszellenkonfiguration, wobei die Planungszellenkonfiguration angibt, dass die erste Planungszelle eine gemeinsame Planung unterstützt oder ermöglicht.

3. Verfahren nach Anspruch 1 oder 2, wobei das Bestimmen (S202), durch ein Terminal, einer ersten geplanten Zellengruppe umfasst:
Erhalten, durch das Terminal, einer ersten Planungszellenkonfiguration, wobei die erste Planungszellenkonfiguration mit der ersten geplanten Zellengruppe assoziiert ist.

4. Verfahren nach Anspruch 1, wobei die erste geplante Zellengruppenkonfiguration, die in der ersten Planungszellenkonfiguration enthalten ist, umfasst: Identifikatoren der mindestens zwei geplanten Zellen, die in der ersten Planungszellenkonfiguration enthalten sind.

5. Verfahren nach Anspruch 1, wobei das Verfahren ferner umfasst: Erhalten, durch das Terminal, einer ersten Planungszellenkonfiguration, wobei die erste Planungszellenkonfiguration mindestens eins von dem Folgenden erfüllt:
die erste Planungszellenkonfiguration gibt an, dass eine Planungszelle, die der ersten Planungszellenkonfiguration entspricht, eine gemeinsame Planung unterstützt oder ermöglicht;
die erste Planungszellenkonfiguration umfasst eine erste geplante Zellengruppenkonfiguration; und
die erste Planungszellenkonfiguration umfasst eine Konfiguration von mindestens einer geplanten Zelle in der ersten geplanten Zellengruppe.

6. Verfahren nach Anspruch 1, wobei das Verfahren ferner umfasst: Erhalten, durch das Terminal, einer Blinddetektionsinformation, wobei die Blinddetektionsinformation mindestens eins von dem Folgenden angibt:
eine Anzahl von Blinddetektionsvorkommen für die eine oder mehreren ersten geplanten Zellengruppen;
eine Aggregationsebene für die eine oder mehreren ersten geplanten Zellengruppen;
eine Anzahl von Blinddetektionsvorkommen für mindestens eine geplante Zelle in jeder der einen oder mehreren ersten geplanten Zellengruppen; und
eine Aggregationsebene für mindestens eine geplante Zelle in jeder der einen oder mehreren ersten geplanten Zellengruppen.

7. Gemeinsames Planungsverfahren, **dadurch gekennzeichnet, dass** es umfasst:
Konfigurieren (S702), durch eine netzwerkseitige Vorrichtung, einer ersten Planungszelle und einer ersten geplanten Zellengruppe für ein Terminal; wobei
die erste Planungszelle für die Überwachung der gemeinsamen Steuerungsinformation verwendet wird; und die erste Planungszelle mindestens das Planen der ersten geplanten Zellengruppe unterstützt, die erste geplante Zellengruppe mindestens zwei geplante Zellen umfasst, deren gemeinsame Planung durch die erste Planungszelle möglich ist, und die gemeinsame Steuerungsinformation das Planen von mindestens zwei geplanten Zellen unterstützt,
wobei das Verfahren ferner umfasst: Senden, durch die netzwerkseitige Vorrichtung, einer ersten geplanten Zellengruppenkonfiguration, wobei die erste geplante Zellengruppenkonfiguration mindestens eins von dem Folgenden erfüllt:
die erste geplante Zellengruppenkonfiguration ist in einer ersten Planungszellenkonfiguration enthalten; und
die erste geplante Zellengruppenkonfiguration ist mit mindestens einer Planungszelle assoziiert.

8. Verfahren nach Anspruch 7, wobei das Konfigurieren (S702), durch eine netzwerkseitige Vorrichtung, einer ersten Planungszelle für ein Terminal umfasst:
Senden, durch die netzwerkseitige Vorrichtung, einer Planungszellenkonfiguration, wobei die Planungszellenkonfiguration angibt, dass die erste Planungszelle eine gemeinsame Planung unterstützt oder ermöglicht.

9. Verfahren nach Anspruch 7 oder 8, wobei das Konfigurieren (S702), durch eine netzwerkseitige Vorrichtung, einer ersten geplanten Zellengruppe für ein Terminal umfasst:
Senden, durch die netzwerkseitige Vorrichtung, einer ersten Planungszellenkonfiguration, wobei die erste Planungszellenkonfiguration mit der ersten geplanten Zellengruppe assoziiert ist.

10. Verfahren nach Anspruch 7, wobei die erste geplante Zellengruppenkonfiguration, die in der ersten Planungszellenkonfiguration enthalten ist, umfasst: Identifikatoren der mindestens zwei geplanten Zellen, die in der ersten Planungszellenkonfiguration enthalten sind.

11. Verfahren nach Anspruch 7, wobei das Verfahren ferner umfasst: Senden, durch die netzwerkseitige Vorrichtung, einer ersten Planungszellenkonfiguration, wobei die erste Planungszellenkonfiguration mindestens eins von dem Folgenden erfüllt:
die erste Planungszellenkonfiguration gibt an, dass eine Planungszelle, die der ersten Planungszellenkonfiguration entspricht, eine gemeinsame Planung unterstützt oder ermöglicht;
die erste Planungszellenkonfiguration umfasst eine erste geplante Zellengruppenkonfiguration; und
die erste Planungszellenkonfiguration umfasst eine Konfiguration von mindestens einer geplanten Zelle in der ersten geplanten Zellengruppe.

12. Verfahren nach Anspruch 7, wobei das Verfahren ferner umfasst: Senden, durch die netzwerkseitige Vorrichtung, einer Blinddetektionsinformation, wobei die Blinddetektionsinformation mindestens eins von dem Folgenden angibt:
eine Menge von Blinddetektionsvorkommen für die eine oder mehreren ersten geplanten Zellengruppen;
eine Aggregationsebene für die eine oder mehreren ersten geplanten Zellengruppen;
eine Menge von Blinddetektionsvorkommen für mindestens eine geplante Zelle in jeder der einen oder mehreren ersten geplanten Zellengruppen; und
eine Aggregationsebene für mindestens eine geplante Zelle in jeder der einen oder mehreren ersten geplanten Zellengruppen.

13. Terminal, **dadurch gekennzeichnet, dass** es einen Prozessor, einen Speicher und ein Programm oder eine Anweisung, das bzw. die in dem Speicher gespeichert ist und auf dem Prozessor laufen kann, umfasst, wobei das Programm oder die Anweisung durch den Prozessor ausgeführt wird, um das gemeinsame Planungsverfahren nach einem der Ansprüche 1 bis 6 durchzuführen.

14. Netzwerkseitige Vorrichtung, **dadurch gekennzeichnet, dass** sie einen Prozessor, einen Speicher und ein Programm oder eine Anweisung, das bzw. die in dem Speicher gespeichert ist und auf dem Prozessor laufen kann, umfasst, wobei das Programm oder die Anweisung durch den Prozessor ausgeführt wird, um das gemeinsame Planungsverfahren nach einem der Ansprüche 7 bis 12 durchzuführen.

15. Lesbares Speichermedium, **dadurch gekennzeichnet, dass** auf dem lesbaren Speichermedium ein Programm oder eine Anweisung gespeichert ist und das Programm oder die Anweisung durch einen Prozessor ausgeführt wird, um das gemeinsame Planungsverfahren nach einem der Ansprüche 1 bis 6 oder das gemeinsame Planungsverfahren nach einem der Ansprüche 7 bis 12 durchzuführen.

## Revendications

1. Procédé de planification conjointe, **caractérisé en ce qu'**il comprend :
la détermination (S202), par un terminal, d'une première cellule de planification et d'un premier groupe de cellules planifiées ; et
la surveillance (S204), par le terminal, d'informations de commande conjointes sur la première cellule de planification, dans lequel
la première cellule de planification prend au moins en charge la planification du premier groupe de cellules planifiées, le premier groupe de cellules planifiées comprend au moins deux cellules planifiées capables d'être planifiées conjointement par la première cellule de planification, et les informations de commande conjointes prennent en charge la planification d'au moins deux cellules planifiées,
dans lequel le procédé comprend en outre : l'obtention, par le terminal, d'une première configuration de groupe de cellules planifiées, dans lequel la première configuration de groupe de cellules planifiées répond à au moins l'un des éléments suivants :
la première configuration de groupe de cellules planifiées est comprise dans une première configuration de cellule de planification ; et
la première configuration de groupe de cellules planifiées est associée à au moins une cellule de planification.

2. Procédé selon la revendication 1, dans lequel la détermination (S202), par un terminal, d'une première cellule de planification comprend :
l'obtention, par le terminal, d'une configuration de cellule de planification, dans lequel la configuration de cellule de planification indique que la première cellule de planification prend en charge ou permet une planification conjointe.

3. Procédé selon la revendication 1 ou 2, dans lequel la détermination (S202), par un terminal, d'un premier groupe de cellules planifiées comprend :
l'obtention, par le terminal, d'une première configuration de cellule de planification, dans lequel la première configuration de cellule de planification est associée au premier groupe de cellules planifiées.

4. Procédé selon la revendication 1, dans lequel la première configuration de groupe de cellules planifiées comprise dans la première configuration de cellule de planification comprend : des identifiants des au moins deux cellules planifiées comprises dans la première configuration de cellule de planification.

5. Procédé selon la revendication 1, dans lequel le procédé comprend en outre : l'obtention, par le terminal, d'une première configuration de cellule de planification, dans lequel la première configuration de cellule de planification répond à au moins l'un des éléments suivants :
la première configuration de cellule de planification indique qu'une cellule de planification correspondant à la première configuration de cellule de planification prend en charge ou permet une planification conjointe ;
la première configuration de cellule de planification comprend une première configuration de groupe de cellules planifiées ; et
la première configuration de cellule de planification comprend une configuration d'au moins une cellule planifiée dans le premier groupe de cellules planifiées.

6. Procédé selon la revendication 1, dans lequel le procédé comprend en outre : l'obtention, par le terminal, d'informations de détection aveugle, dans lequel les informations de détection aveugle indiquent au moins l'un des éléments suivants :
une quantité de moments de détection à l'aveugle pour les un ou plusieurs premiers groupes de cellules planifiées ;
un niveau d'agrégation pour les un ou plusieurs premiers groupes de cellules planifiées ;
une quantité de moments de détection à l'aveugle pour au moins une cellule planifiée dans chacun des un ou plusieurs premiers groupes de cellules planifiées ; et
un niveau d'agrégation pour au moins une cellule planifiée dans chacun des un ou plusieurs premiers groupes de cellules planifiées.

7. Procédé de planification conjointe, **caractérisé en ce qu'**il comprend :
la configuration (S702), par un dispositif côté réseau, d'une première cellule de planification et d'un premier groupe de cellules planifiées pour un terminal, dans lequel
la première cellule de planification est utilisée pour la surveillance d'informations de commande conjointes ; et la première cellule de planification prend au moins en charge la planification du premier groupe de cellules planifiées, le premier groupe de cellules planifiées comprend au moins deux cellules planifiées capables d'être planifiées conjointement par la première cellule de planification, et les informations de commande conjointes prennent en charge la planification d'au moins deux cellules planifiées,
dans lequel le procédé comprend en outre : l'envoi, par le dispositif côté réseau, d'une première configuration de groupe de cellules planifiées, dans lequel la première configuration de groupe de cellules planifiées répond à au moins l'un des éléments suivants :
la première configuration de groupe de cellules planifiées est comprise dans une première configuration de cellule de planification ; et
la première configuration de groupe de cellules planifiées est associée à au moins une cellule de planification.

8. Procédé selon la revendication 7, dans lequel la configuration (S702), par un dispositif côté réseau, d'une première cellule de planification pour un terminal comprend :
l'envoi, par le dispositif côté réseau, d'une configuration de cellule de planification, dans lequel la configuration de cellule de planification indique que la première cellule de planification prend en charge ou permet une planification conjointe.

9. Procédé selon la revendication 7 ou 8, dans lequel la configuration (S702), par un dispositif côté réseau, d'un premier groupe de cellules planifiées pour un terminal comprend :
l'envoi, par le dispositif côté réseau, d'une première configuration de cellule de planification, dans lequel la première configuration de cellule de planification est associée au premier groupe de cellules planifiées.

10. Procédé selon la revendication 7, dans lequel la première configuration de groupe de cellules planifiées comprise dans la première configuration de cellule de planification comprend : des identifiants des au moins deux cellules planifiées comprises dans la première configuration de cellule de planification.

11. Procédé selon la revendication 7, dans lequel le procédé comprend en outre : l'envoi, par le dispositif côté réseau, d'une première configuration de cellule de planification, dans lequel la première configuration de cellule de planification répond à au moins l'un des éléments suivants :
la première configuration de cellule de planification indique qu'une cellule de planification correspondant à la première configuration de cellule de planification prend en charge ou permet une planification conjointe ;
la première configuration de cellule de planification comprend une première configuration de groupe de cellules planifiées ; et
la première configuration de cellule de planification comprend une configuration d'au moins une cellule planifiée dans le premier groupe de cellules planifiées.

12. Procédé selon la revendication 7, dans lequel le procédé comprend en outre : l'envoi, par le dispositif côté réseau, d'informations de détection à l'aveugle, dans lequel les informations de détection à l'aveugle indiquent au moins l'un des éléments suivants :
une quantité de moments de détection à l'aveugle pour les un ou plusieurs premiers groupes de cellules planifiées ;
un niveau d'agrégation pour les un ou plusieurs premiers groupes de cellules planifiées ;
une quantité de moments de détection à l'aveugle pour au moins une cellule planifiée dans chacun des un ou plusieurs premiers groupes de cellules planifiées ; et
un niveau d'agrégation pour au moins une cellule planifiée dans chacun des un ou plusieurs premiers groupes de cellules planifiées.

13. Terminal, **caractérisé en ce qu'**il comprend un processeur, une mémoire et un programme ou une instruction qui est stocké dans la mémoire et qui peut être lancé sur le processeur, dans lequel le programme ou l'instruction est exécuté par le processeur pour mettre en œuvre le procédé de planification conjointe selon l'une quelconque des revendications 1 à 6.

14. Dispositif côté réseau, **caractérisé en ce qu'**il comprend un processeur, une mémoire et un programme ou une instruction qui est stocké dans la mémoire et qui peut être lancé sur le processeur, dans lequel le programme ou l'instruction est exécuté par le processeur pour mettre en œuvre le procédé de planification conjointe selon l'une quelconque des revendications 7 à 12.

15. Support de stockage lisible, **caractérisé en ce que** le support de stockage lisible stocke un programme ou une instruction, et le programme ou l'instruction est exécuté par un processeur pour mettre en œuvre le procédé de planification conjointe selon l'une quelconque des revendications 1 à 6 ou le procédé de planification conjointe selon l'une quelconque des revendications 7 à 12.
